# EUROPEAN PATENT APPLICATION

(11) **EP 4 421 582 A1**
(43) Date of publication of application: **28.08.2024**
(21) Application number: 23769586.1
(22) Date of filing: 06.03.2023
(51) Int. Cl.: G05D 1/02

(54) **PATH PLANNING METHOD AND APPARATUS, AND CLOUD PLATFORM**

(30) Priority: 16.03.2022 CN 202210261499
(71) Applicant: Yutong Bus Co., Ltd., Zhengzhou, Henan 450061 (CN)
(72) Inventor: CAO, Lumeng, Zhengzhou, Henan 450061 (CN); HUANG, Kun, Zhengzhou, Henan 450061 (CN); WANG, Xiaojuan, Zhengzhou, Henan 450061 (CN); LIU, Guorong, Zhengzhou, Henan 450061 (CN); YAN, Mengyang, Zhengzhou, Henan 450061 (CN); HE, Liang, Zhengzhou, Henan 450061 (CN); LI, Tao, Zhengzhou, Henan 450061 (CN)
(74) Representative: Gulde & Partner
(86) International application number: PCT/CN2023/079723
(87) International publication number: WO 2023/174080

(57) **Abstract**

A path planning method and apparatus, and a cloud platform are disclosed. In the path planning method, a navigation map file is first invoked, where different intersections, roads, and nodes in the navigation map file are respectively distinguished through different intersection numbers, road numbers, and node numbers, and the navigation map file stores node information; and then, according to various pieces of information stored in the navigation map file and the relationships between the information, a shortest path of a vehicle is planned by using a heuristic path planning search algorithm. In this way, a large amount of pieces of information with little use in a high-precision map are effectively reduced, a map data amount is reduced, and occupation of data storage space is reduced. In addition, time for searching for information is effectively reduced when the heuristic path planning search algorithm is executed, and an execution speed of the algorithm is improved when precision of the algorithm is ensured.

## Description

### TECHNICAL FIELD

The present invention belongs to the field of path planning technologies, and specifically, relates to a path planning method and apparatus, and a cloud platform.

### BACKGROUND

As a basis and an important component for implementing smart logistics, unmanned driving vehicles have advantages of not being restricted by sites, roads, and space, and the like, and can realize intelligent and high-quality distribution in scenarios such as airports, docks, industrial parks, and living parks. Different from ordinary roads, spatial resources such as accessible roads and interaction nodes are designed in such types of parks, actions such as going straight, changing lanes, and retreating are usually allowed on the roads, and control measures such as traffic lights are generally not arranged at intersections. As one of key technologies of an unmanned driving system, path planning aims to generate an optimal drivable path according to an environment map, start point information, and end point information, to realize a navigation function of the unmanned driving system in a complex environment.

There are many mature solutions for path planning under a conventional non-cloud architecture. However, for large-scale unmanned logistics fleets, there are problems such as difficult management and low dispatching efficiency. With the development of cloud computing technologies, in the field of smart logistics, building a technical solution of efficient intelligent distribution path planning based on a cloud platform environment can improve efficiency of path planning, reduce management costs, and ensure efficient and stable development of logistics dispatching tasks.

However, path planning under the conventional non-cloud architecture or path planning under the cloud architecture is mostly still implemented according to high-precision maps, to ensure precision of path planning. For example, the Chinese Invention Patent Application with the publication No. CN113654570A discloses a path planning method, a server, and a system. In the path planning method, an initially planned path needs to be first determined according to a map service module, then a geological hazard area in an initially planned path area is determined according to a remote sensing image, and the initially planned path is determined as a final planned path when there is no intersection between the geological hazard area and the initial path area. In other words, the implementation of the method relies on the high-precision map service module, and also relies on the remote sensing image. The high-precision map service module and the remote sensing image not only occupy a large amount of data storage resources in the server, but also slow down an execution speed of the entire path planning method.

### SUMMARY

The present invention aims to provide a path planning method and apparatus, and a cloud platform, to resolve problems in the prior art that large space of data storage resources is occupied and an execution speed of the path planning method is slow due to use of a high-precision map in path planning.

To resolve the foregoing technical problems, technical solutions provided in the present invention and beneficial effects corresponding to the technical solutions are as follows:

A path planning method in the present invention includes a manual dispatching path planning method, where the manual dispatching path planning method includes the following steps:
1) obtaining a path planning request of a vehicle, and invoking a correspondingly stored navigation map file according to areas related to an initial location of the vehicle and a task target location in the path planning request, where
   each navigation map file includes intersections and roads for connecting the intersections, both a start point and an end point of a road corresponding to a road drivable direction are referred to as nodes, the navigation map file further includes start point information and end point information, the start point information includes a start point location, and the end point information includes an end point location; different intersections are distinguished through different intersection numbers, different roads are distinguished through different road numbers, different nodes are distinguished through different node numbers, and the node numbers include start point numbers and end point numbers; for a start point, nodes at a same intersection as the start point and an end point corresponding to a road drivable direction of the start point are defined as adjacent nodes of the start point, and for an end point, nodes at a same intersection as the end point are defined as adjacent nodes of the end point;
2) accessing a node in the navigation map file starting from an initial node corresponding to the initial location of the vehicle, and using the initial node as an access node; and
3) matching a next node for access from adjacent nodes of the access node according to a set evaluation function, using the next node as an access node, and repeating step 3) until a target node corresponding to the task target location in the request is accessed, so as to plan a shortest path of the vehicle as an optimal path of the vehicle, and to cause the vehicle to drive according to the planned optimal path.

A beneficial effect of the foregoing technical solution is as follows: In the present invention, a high-precision map used in path planning is digitally streamlined for operation, that is, the high-precision map is converted into a navigation map file for storage. The navigation map file stores intersections, roads, and start points and end points (collectively referred to as nodes) of the roads, and node information. Further, to simplify such pieces of information, different intersections, roads, and nodes are respectively distinguished through different intersection numbers, road numbers, and node numbers. In this way, according to such pieces of information and the relationships between the information, a shortest path of a vehicle can be planned by using a heuristic path planning search algorithm. Through the method, a large amount of pieces of information with little use in the high-precision map are effectively reduced, a map data amount is reduced, and occupation of data storage space is reduced. In addition, time for searching for information is effectively reduced when the heuristic path planning search algorithm is executed, and an execution speed of the algorithm is improved when precision of the algorithm is ensured.

As a further improvement to the foregoing method, in step 3), the evaluation function is that f(n)=g(n)+h(n), where f(n) indicates the evaluation function value, g(n) indicates a cost from an access node to an adjacent node n of the access node, h(n) indicates a smallest cost from the adjacent node n to the target node, and a cost value is calculated according to a road distance.

A beneficial effect of the foregoing technical solution is as follows: The evaluation function is designed according to the road distance, to ensure that the planned optimal path is the shortest path.

As a further improvement to the foregoing method, when a distance between two nodes is calculated, if the two nodes are at a same intersection and a latter one of the two nodes in the planned path is a start point, the distance between the two nodes is set to 0; if the two nodes are at the same intersection and the latter one of the two nodes in the planned path is an end point, the distance between the two nodes is set to infinity.

A beneficial effect of the foregoing technical solution is as follows: When two nodes are at a same intersection, a distance between the two nodes is set to 0 when a latter one of the two nodes is a start point, which aims to ignore a distance in the intersection, thereby improving execution efficiency and speed of the heuristic path planning search algorithm; the distance between the two nodes is set to infinity when the latter one of the two nodes is an end point, which aims to indicate that communication access cannot be performed between the two nodes in a manner from a previous node to a next node.

As a further improvement to the foregoing method, in step 1), the stored navigation map file is stored by using roads as data set units, each of the data set units is configured to store related information of one road, and the related information includes a road number of the road, and a start point number, an end point number, start point information, end point information, a start point intersection number, and an end point intersection number that correspond to the road.

A beneficial effect of the foregoing technical solution is as follows: The navigation map file is directly stored by using the roads as the data set units, data in numerous navigation map files is summarized and classified for storage, and relationships among nodes, intersections, and roads can be reflected, making it easier to find required information, thereby improving execution efficiency and speed of the heuristic path planning search algorithm.

As a further improvement to the foregoing method, if a road includes two drivable directions, the same road with the two drivable directions is distinguished through different road numbers.

A beneficial effect of the foregoing technical solution is as follows: The same road with the two drivable directions is distinguished through the different road numbers, providing a possibility of reverse driving and reversing of a vehicle.

As a further improvement to the foregoing method, each of the data set units further includes a road length of the road.

A beneficial effect of the foregoing technical solution is as follows: The road length is directly stored, so that calculation is not required when a distance between nodes, and the stored data set unit is directly searched, thereby improving the execution efficiency and speed of the heuristic path planning search algorithm.

As a further improvement to the foregoing method, if the start point information further includes a start point heading angle, the end point information further includes an end point heading angle, and a step of streamlining the adjacent nodes of the access node is further included before step 3), in step 3), the next node is matched for access from streamlined adjacent nodes of the access node according to the set evaluation function; the step of streamlining the adjacent nodes of the access node includes: calculating a heading angle deviation δ between the access node and an adjacent node of the access node: 8=|yaw_n-yaw_i|, where yaw_i indicates a heading angle of the access node, and yaw_n indicates a heading angle of the adjacent node of the access node; if the heading angle deviation δ meets that δ ≥ δ max, an adjacent node n of the access node does not participate in a subsequent node matching work, where δmax indicates a set heading angle deviation threshold.

A beneficial effect of the foregoing technical solution is as follows: Before nodes matching, a node streamlining operation is first performed by using a heading angle, thereby improving execution efficiency and speed of the heuristic path planning search algorithm.

As a further improvement to the foregoing method, the method further includes a cloud-controlled dispatching path planning method, where the cloud-controlled dispatching path planning method includes the following steps: A) planning shortest path of each vehicle according to a method the same as the manual dispatching method; B) calculating a total cost function value of each shortest path, and selecting a shortest path with a smallest cost function value as an optimal path, to cause a vehicle corresponding to the optimal path to drive according to the planned optimal path, where the total cost function is that Cost(i)=c(1)*costl(i)+c(2)*cost2(i)+...+c(k)*costk(i), where Cost(i) indicates the total cost function value, cost1(i), cost2(i), ..., and costk(i) indicate cost function values related to various pieces of information, c(1), c(2), ..., and c(k) indicate weights corresponding to the cost function values, c(1)+c(2)+...+c(k)=1, and k≥1; and the total cost function value includes at least one of a cost function value related to distance information of a planned path, a cost function value related to driving time information, or a cost function value related to vehicle battery level information.

A beneficial effect of the foregoing technical solution is as follows: For the cloud-controlled dispatching path planning method, the method similar to the manual dispatching path planning method is used. Shortest paths of a plurality of idle vehicles are respectively planned. In this way, by using a plurality of pieces of information of each of the shortest paths, a total cost function of each of the shortest paths can be calculated for a distance of a planned path, driving time, a vehicle battery level, and the like, to select an optimal path from the shortest paths. When the total cost function refers to more pieces of information, the optimal path is considered, and other information such as the battery level is also considered, which are more conducive to proper and efficient execution of dispatching. In this way, flexible and changeable service scenarios are supported, different response manners are used according to different requirements, and path planning can be efficiently completed.

A path planning apparatus in the present invention includes a memory and a processor, where the processor is configured to execute instructions stored in the memory, to implement the path planning method described above, and achieve technical beneficial effects the same as those of the method.

A cloud platform in the present invention includes a memory and a processor, where the memory stores a navigation map file and computer instructions, and the processor is configured to execute the computer instructions stored in the memory, to implement the path planning method described above, and achieve technical beneficial effects the same as those of the method.

### BRIEF DESCRIPTION OF THE DRAWINGS

FIG. 1 is a flowchart of a path planning method according to an embodiment of the present invention;
FIG. 2 is a schematic diagram of a bidirectional topology map according to an embodiment of the present invention; and
FIG. 3 is a structural diagram of a path planning apparatus according to an embodiment of the present invention.

### DETAILED DESCRIPTION

A path planning method, a path planning apparatus, and a cloud platform in the present invention are described in details with reference to accompanying drawings and embodiments.

### Method embodiment:

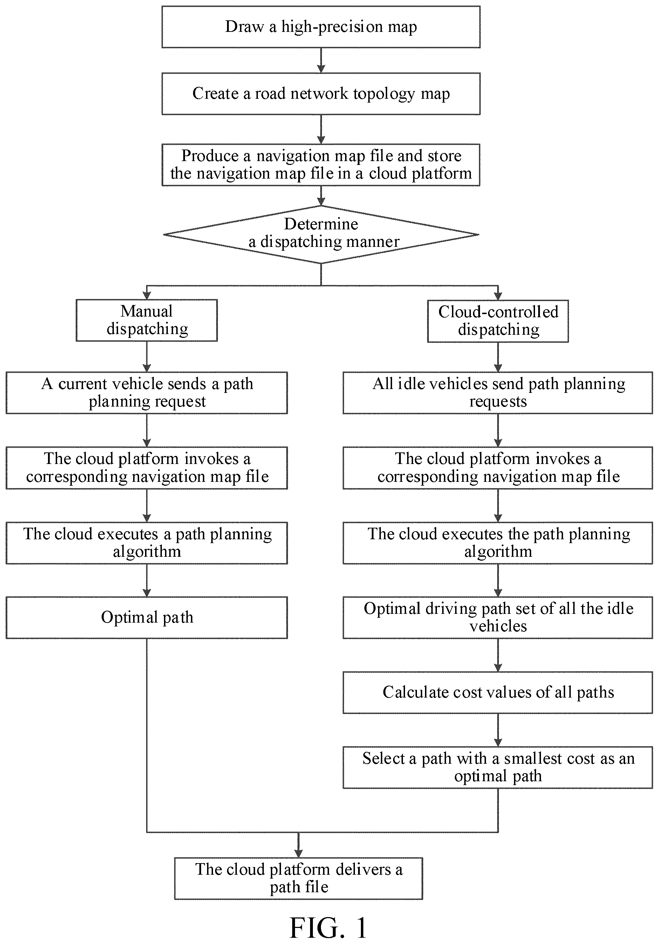

In an embodiment, a path planning method in the present invention has an operating environment with a plurality of parks, to realize unmanned logistics distribution in the plurality of parks, where all vehicles are unmanned driving vehicles. An entire procedure of implementing the method is shown in FIG. 1, and is specifically described below.

Step 1: Obtain a high-precision map of the operating environment.

High-precision map data is acquired, and information, such as intersection identifiers, road identifiers, road lengths, node identifiers, and node coordinates, is labeled.

Step 2: Create a road network topology map.

The information of roads, such as the intersection identifiers, the road identifiers, the road lengths, the node identifiers, and the node coordinates, is produced into a road network topology digital map in a specific format. This embodiment is targeted at parks, roads in the parks are generally narrow, driving can be performed in both forward and reverse directions of many roads, and vehicles can also reverse. Therefore, to meet application requirements of driving in two directions and reversing by the vehicles on the roads, the topology map is produced into a bidirectional topology map.

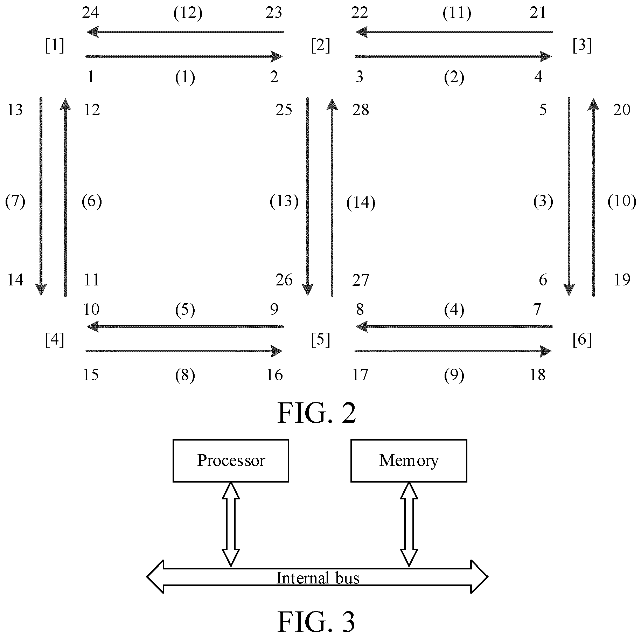

The produced bidirectional topology map includes a plurality of intersections and roads for connecting to the intersections, and both a start point and an end point of a road corresponding to a road drivable direction are referred to as nodes. Different intersections are distinguished through different intersection numbers, different roads are distinguished through different road numbers, different nodes are distinguished through different node numbers, and the node numbers include start point numbers and end point numbers. As shown in FIG. 2, square brackets [k] indicate an intersection k; an arrow → indicates a road and a direction pointed to by the arrow is a drivable direction of the road, and parentheses (k) indicate a road k; a number k indicates a node k, including a start point and an end point of a road. In addition, two roads indicated by two arrows in opposite directions between some intersections in FIG. 2 of this embodiment are one road in an actual operating environment. Because driving can be performed in two directions of the road, the two directions are directly indicated by using two arrows in opposite directions in FIG. 2. For example, roads between an intersection [1] and an intersection [2] displayed in the bidirectional topology map in FIG. 2 include a road (1) and a road (12). However, in the actual operating environment, the road (1) and the road (12) are actually one road. In this embodiment, this type of road with the two drivable directions is directly indicated through two different roads in the bidirectional topology map. Correspondingly, road numbers of the two roads are different, and start points and end points of the two roads are respectively indicated through different node numbers. For example, in FIG. 2, a start point of the road (1) is a node 1, an end point of the road (1) is a node 2, a start point of the road (12) is a node 23, and an end point of the road (12) is a node 24. However, in the actual operating environment, actual geographical locations of the node 1 and the node 24 are the same, and actual geographical locations of the node 23 and the node 2 are also the same.

Step 3: Produce and store a navigation map file.

In a specific form, road information data in the bidirectional topology map in step 2 is produced into the navigation map file by using roads as data set units. Each data set unit L(i) (i=1, 2, ..., or K, where K indicates a total quantity of roads in the navigation map file) is configured to store related information of one road, and the related information includes a road number of the road, a road length, start point information, end point information, a start point intersection number, and an end point intersection number. In this embodiment, the start point information includes a start point location and a start point heading angle, and the start point location further includes a start point abscissa and a start point ordinate; the end point information includes an end point location and an end point heading angle, and the end point location further includes an end point abscissa and an end point ordinate. A set storage format of the navigation map file is shown in Table 1 below. To be specific, the road number, the road length, a start point number, the start point abscissa, the start point ordinate, the start point heading angle, the start point intersection number, an end point number, the end point abscissa, the end point ordinate, the end point heading angle, and the end point intersection number are stored in sequence.

Heading angles of all nodes are calculated based on a same direction, such as north. In addition, a storage order of various pieces of information herein can change. In addition, the start point abscissa and the start point ordinate may be stored together, and the end point abscissa and the end point ordinate may be stored together.

**Table 1**

| Number | 1 | 2 | 3 | 4 | 5 | 6 | 7 | 8 | 9 | 10 | 11 | 12 |
|---|---|---|---|---|---|---|---|---|---|---|---|---|
| Meanings | Road number | Road length | start point number | start point abscissa | start point ordinate | Start point heading angle | Start point intersection number | End point number | End point abscissa | End point ordinate | End point heading angle | End point intersection number |

A generated navigation map file set Map (k) (k=1, 2, ..., or L, where L indicates a total quantity of navigation map files) is stored in a cloud platform to be used as a map database of path planning.

When there is a plurality of scenario operating requirements, a plurality of navigation map files may be respectively named and stored, and invoked as required. For example, one navigation map file may be correspondingly set for one park. When a park is large, two or more navigation map files may also be correspondingly set for one park.

Step 4: Dispatching and a path planning request.

According to service scenario requirements, the dispatching is divided into a manual dispatching manner and a cloud-controlled dispatching manner.
1. Manual dispatching manner: A user sends a dispatching task requirement for a specific vehicle at a vehicle side or a mobile terminal, and the autonomous vehicle sends a current initial pose (x_st, y_st, yaw_st), a task target pose (x_ed, y_ed, yaw_ed), and a path planning request Request to the cloud platform. x_st, y_st, and yaw_st respectively indicate an initial abscissa, an initial ordinate, and an initial heading angle, and x_ed, y_ed, and yaw_ed respectively indicate a task target abscissa, a task target ordinate, and a task target heading angle.
2. Cloud-controlled dispatching manner: The cloud platform obtains the task target pose (x_ed, y_ed, yaw_ed), a current initial pose (x_st(i), y_st(i), yaw_st(i)) (i=1, 2, ..., or N, where N indicates a total quantity of vehicles) of a vehicle, and an idle and operating status of the vehicle (when state=1, the vehicle is in an idle state; and when state=0, the vehicle is in an operating state) in real time. All idle vehicles send a total quantity of path planning requests Request (i) (i = 1, 2, ..., or M, where M indicates a total quantity of idle vehicles) to the cloud platform.

Step 5: The cloud platform receives the path planning request, and performs path planning based on an improved heuristic path planning search algorithm. A specific process is as follows:
1) According to areas related to the path planning request of the vehicle, the cloud platform invokes a corresponding navigation map file Map (k) (k=1, 2, ..., or Num, where Num indicates a total quantity of navigation map files to be invoked), and obtains data set unit sets L(1), L(2), ..., and L(K) in the navigation map file Map (k), where K indicates a total quantity of roads in the navigation map file.
2) Access a node in the navigation map file starting from an initial node corresponding to an initial location of the vehicle, and use the initial node as an access node.
3) Determine an adjacent node i (i=1, 2, ..., or Z, where Z indicates a total quantity of adjacent nodes) of an access node n. If the access node is a start point, nodes at a same intersection as the start point and an end point corresponding to a road drivable direction of the start point are defined as adjacent nodes of the start point. If the access node is an end point, nodes at a same intersection as the end point are defined as adjacent nodes of the end point. For example, adjacent nodes of the node 1 (used as a start point) in FIG. 2 include the node 24, a node 13, a node 12, and the node 2; adjacent nodes of a node 26 (used as an end point) in FIG. 2 include a node 27, a node 8, a node 17, a node 16, and a node 9.
4) Calculate a heading angle deviation δ between the access node i and the adjacent node n: δ =|yaw_n - yaw_i|, where yaw_i indicates a heading angle of the access node i, and yaw_n indicates a heading angle of the adjacent node n of the access node; if the heading angle deviation δ meets that δ ≥ δ max, the adjacent node i of the access node does not participate in a subsequent node matching work, and if the heading angle deviation δ meets that δ<δmax, the adjacent node i of the access node may participate in the subsequent node matching work (that is, step 5) is performed), where δmax indicates a set heading angle deviation threshold. In this way, access nodes are streamlined. In the step, the adjacent nodes are streamlined by using heading angles before a next node is matched from adjacent nodes of the access node, which can improve computing efficiency.
5) Match, according to a set evaluation function, a next node for access from streamlined adjacent nodes of the access node i. Details are as follows:

The set evaluation function is that f(n)=g(n)+h(n), where f(n) indicates the evaluation function value, g(n) indicates a cost from the access node i to the adjacent node n, h(n) indicates a smallest cost from the adjacent node n to a target node corresponding to a task target location, and a cost value is calculated according to a total road distance. The smallest cost is a shortest distance.

In other words, a manner of the step is as follows: A distance g(n) between the access node i and the adjacent node n is first determined, then a shortest distance h(n) between the adjacent node n and a target node corresponding to the task target pose is determined (where the shortest distance needs to be obtained through a plurality of attempts and calculations), and the distance g(n) and the shortest distance h(n) are added to obtain an evaluation function value of the adjacent node n. According to the method, an evaluation function value corresponding to each of the streamlined adjacent nodes may be calculated, and an adjacent node with a smallest evaluation function is selected as the next node, that is, the matched next node.

In addition, when a distance between two nodes is calculated, if the two nodes are a start point and an end point of one road, the distance between the two nodes is a road length; if the two nodes are at a same intersection and a latter one of the two nodes in a planned path is a start point, the distance between the two nodes is zero, which aims to ignore a distance in the intersection, thereby improving computing efficiency; if the two nodes are at the same intersection and the latter one of the two nodes in the planned path is an end point, the distance between the two nodes is ∞, which aims to indicate that driving cannot be performed between the two nodes. The evaluation function value may be calculated according to the principle. For example, the adjacent nodes of the node 1 include the node 2, the node 12, the node 13, and the node 24, and a road length of the road (1) is dis1. In this case, distances between the node 1 and the node 2, the node 12, the node 13, and the node 24 are respectively dis1, ∞, 0, and ∞.

6) Use the next node as an access node, and repeat step 5) to perform a plurality of calculations until the target node corresponding to the task target pose is accessed, to plan a shortest path of the vehicle.

Step 6: Select an optimal path based on different dispatching manners.
1. Manual dispatching manner: The optimal path calculated according to the method in step 5 is used as an optimal path of the vehicle.
2. Cloud-controlled dispatching manner: ① According to the method in step 5, shortest paths of all idle vehicles are calculated, and are Road (1), Road (2), ..., and Road (M) respectively. ② Information of Road (i) (i=1, 2, ..., or M), such as a distance, driving time, and a vehicle battery level, each is used as a cost function costk(i) (where k indicates a quantity of cost functions) thereof. A time cost may be calculated according to a distance/speed. Different scenarios may be distinguished according to indoor, outdoor, reversing, turning, intersections and the like, time required in different scenarios is calculated by using different speed limit values, and a sum thereof is a total time cost. The vehicle battery level may be obtained through the cloud platform in real time. When the battery level is greater than a smallest battery level threshold, a cost value of the battery level may be set to 0; when the battery level is less than the battery level threshold, the cost value is obtained by sorting battery levels. Certainly, each cost function may alternatively be calculated in another manner. (3) According to that a total cost function Cost(i)=c(1)*costl(i)+c(2)*cost2(i)+...+c(k)*costk(i), a total cost function corresponding to each of the shortest paths is calculated. cost1(i), cost2(i), ..., and costk(i) indicate cost functions related to various pieces of information, c(1), c(2), ..., and c(k) indicate weights corresponding to the cost functions, and c(1)+c(2)+...+c(k)=1. ④ A shortest path with a smallest total cost function is selected as an optimal path, to cause a vehicle corresponding to the optimal path to drive according to the planned optimal path.

Step 7: The cloud platform delivers a planned optimal path file to the corresponding vehicle.

The optimal path calculated in step 6 is delivered to the corresponding autonomous vehicle to complete global path planning, and the vehicle may drive following the path accordingly. When the environment changes or a dynamic obstacle appears during driving, the vehicle side can perform local path planning to ensure safe driving of the vehicle.

So far, the path planning method in the present invention is completed.

In step 5) of step 5 in this embodiment, if the two nodes are at the same intersection and the latter one of the two nodes in the planned path is the start point, the distance between the two nodes is set to 0, which improves the execution efficiency and speed of the heuristic path planning search algorithm by ignoring the distance in the intersection. In another implementation, the distance before the two nodes may also not be ignored, and the distance between the two nodes may be calculated by using poses of the two nodes. The distance may be directly stored in the navigation map file, and may be directly used when needed. Alternatively, the distance may be calculated by using the poses of the two nodes when needed. In this case, the execution speed and efficiency of the algorithm is inevitably reduced, but precision of path planning is improved.

The navigation map file in this embodiment is stored by using the roads as the data set units, and each of the data set units stores information related to one road. Through this storage manner, required information can be quickly found. In another implementation, the navigation map file may also not be stored by using the roads as the data set units, but all pieces of required information are directly stored in the navigation map file.

The navigation map file in this embodiment is stored by using the roads as the data set units, and each of the data set units directly stores a road length. In this way, the execution efficiency and speed of the heuristic path planning search algorithm can be improved. In another implementation, the road length may also not be stored, and is directly calculated according to location information of nodes in a process of executing the heuristic path planning search algorithm. In this way, the execution speed of the heuristic path planning search algorithm is inevitably reduced, but storage space occupied by the navigation map file is reduced.

In summary, the method has the following characteristics:
1) The bidirectional topology map is created by using the high-precision map, and is stored in the form of the navigation map file. In this way, the map data amount can be reduced, the execution speed of the algorithm can be improved, and the occupation of data storage space can be reduced; the possibility of reverse driving and reversing of the vehicle is provided.
2) In the present invention, the map file database is stored in a cloud, and the path planning method is deployed, that is, a path is automatically generated by using the heuristic path planning search algorithm. In this way, resources on the vehicle side are not consumed, and navigation of the vehicle is realized only through data transmission.
3) Combined with actual operating characteristics of the autonomous vehicle, the manual dispatching manner and the cloud-controlled dispatching manner are handled differently. In this way, flexible and changeable service scenarios are supported, different response manners are used according to different application requirements, and path planning can be efficiently completed.
4) For the cloud dispatching manner, a plurality of factors are considered to evaluate a driving path, and a driving path with a highest comprehensive score is selected as an optimal driving path, so that the planned path has good comprehensive performance. In this way, the optimal path is considered, and other information such as the battery level is also considered, which are more conducive to proper and efficient execution of dispatching.

### Apparatus embodiment:

In an embodiment, a structure of a path planning apparatus in the present invention is shown in FIG. 3, and includes a memory, a processor, and an internal bus. The processor and the memory complete mutual communication and data exchange through the internal bus. The memory includes at least one software functional module stored in the memory. The processor executes various functional applications and data processing by running software programs/various modules stored in the memory, to implement the path planning method in the method embodiment of the present invention.

The processor may be a processing apparatus such as a microprocessor MCU, or a field programmable gate array FPGA. The memory may be various memories that use electrical energy to store information, for example, a RAM, and a ROM; or may be various memories that use magnetic energy to store information, for example, a hard disk, a floppy disk, a magnetic tape, a magnetic core memory, a magnetic bubble memory, and a USB flash drive; or may be various memories that store information in an optical manner, for example, a CD, and a DVD; or may certainly be memories of other types, for example, a quantum memory, and a graphene memory.

### Cloud platform embodiment:

In an embodiment of a cloud platform in the present invention, the cloud platform includes a path planning apparatus. A structure of the path planning apparatus is shown in FIG. 3, and includes a memory, a processor, and an internal bus. The processor and the memory complete mutual communication and data exchange through the internal bus. The memory stores a navigation map file and computer instructions, and the processor is configured to execute the computer instructions stored in the memory, to implement the path planning method in the present invention. The navigation map file and the path planning method in the present invention have been described in detail in the method embodiment, and details are not described herein again.

## Claims

1. A path planning method, comprising a manual dispatching path planning method, wherein the manual dispatching path planning method comprises the following steps:
1) obtaining a path planning request of a vehicle, and invoking a correspondingly stored navigation map file according to areas related to an initial location of the vehicle and a task target location in the path planning request, wherein
each navigation map file comprises intersections and roads for connecting the intersections, both a start point and an end point of a road corresponding to a road drivable direction are referred to as nodes, the navigation map file further comprises start point information and end point information, the start point information comprises a start point location, and the end point information comprises an end point location; different intersections are distinguished through different intersection numbers, different roads are distinguished through different road numbers, different nodes are distinguished through different node numbers, and the node numbers comprise start point numbers and end point numbers; for a start point, nodes at a same intersection as the start point and an end point corresponding to a road drivable direction of the start point are defined as adjacent nodes of the start point, and for an end point, nodes at a same intersection as the end point are defined as adjacent nodes of the end point;
2) accessing a node in the navigation map file starting from an initial node corresponding to the initial location of the vehicle, and using the initial node as an access node; and
3) matching a next node for access from adjacent nodes of the access node according to a set evaluation function, using the next node as an access node, and repeating step 3) until a target node corresponding to the task target location in the request is accessed, so as to plan a shortest path of the vehicle as an optimal path of the vehicle, and to cause the vehicle to drive according to the planned optimal path.

2. The path planning method according to claim 1, wherein in step 3), the evaluation function is that f(n)=g(n)+h(n), wherein f(n) indicates the evaluation function value, g(n) indicates a cost from an access node to an adjacent node n of the access node, h(n) indicates a smallest cost from the adjacent node n to the target node, and a cost value is calculated according to a road distance.

3. The path planning method according to claim 2, wherein when a distance between two nodes is calculated, if the two nodes are at a same intersection and a latter one of the two nodes in the planned path is a start point, the distance between the two nodes is set to 0; if the two nodes are at the same intersection and the latter one of the two nodes in the planned path is an end point, the distance between the two nodes is set to infinity.

4. The path planning method according to claim 1, wherein in step 1), the navigation map file is stored by using roads as data set units, each of the data set units is configured to store related information of one road, and the related information comprises a road number of the road, and a start point number, an end point number, start point information, end point information, a start point intersection number, and an end point intersection number that correspond to the road.

5. The path planning method according to claim 4, wherein if a road comprises two drivable directions, the same road with the two drivable directions is distinguished through different road numbers.

6. The path planning method according to claim 4, wherein each of the data set units further comprises a road length of the road.

7. The path planning method according to claim 1, wherein the start point information further comprises a start point heading angle, the end point information further comprises an end point heading angle, and a step of streamlining the adjacent nodes of the access node is further comprised before step 3), in step 3), the next node is matched for access from streamlined adjacent nodes of the access node according to the set evaluation function;
the step of streamlining the adjacent nodes of the access node comprises: calculating a heading angle deviation δ between the access node and an adjacent node of the access node: 8=|yaw _n-yaw _i, wherein yaw_i indicates a heading angle of the access node, and yaw_n indicates a heading angle of the adjacent node of the access node; if the heading angle deviation δ meets that δ≥δmax, an adjacent node n of the access node does not participate in a subsequent node matching work, wherein δmax indicates a set heading angle deviation threshold.

8. The path planning method according to claim 1, further comprising a cloud-controlled dispatching path planning method, wherein the cloud-controlled dispatching path planning method comprises the following steps:
A) planning shortest path of each vehicle according to a method the same as the manual dispatching method; and
B) calculating a total cost function value of each shortest path, and selecting a shortest path with a smallest cost function value as an optimal path, to cause a vehicle corresponding to the optimal path to drive according to the planned optimal path, the total cost function is that Cost(i)=c(1)*costl(i)+c(2)*cost2(i)+...+c(k)*costk(i), Cost(i) indicates the total cost function value, cost1(i), cost2(i), ..., and costk(i) indicate cost function values related to various pieces of information, c(1), c(2), ..., and c(k) indicate weights corresponding to the cost function values, c(1)+c(2)+...+c(k)=1, and k≥1; the total cost function value comprises at least one of a cost function value related to distance information of a planned path, a cost function value related to driving time information, or a cost function value related to vehicle battery level information.

9. A path planning apparatus, comprising a memory and a processor, wherein the processor is configured to execute computer instructions stored in the memory, so as to implement the path planning method according to any one of claims 1 to 8.

10. A cloud platform, comprising a memory and a processor, wherein the memory stores a navigation map file and computer instructions, and the processor is configured to execute the computer instructions stored in the memory, so as to implement the path planning method according to any one of claims 1 to 8.
